# EUROPEAN PATENT SPECIFICATION

(11) **EP 0 781 313 B1**
(45) Date of publication and mention of the grant of the patent: **20.11.2002**
(21) Application number: 95932246.2
(22) Date of filing: 08.09.1995
(51) Int. Cl.: C10G 1/06, C10G 47/30

(54) **THERMO-MECHANICAL CRACKING AND HYDROGENATION**
THERMOMECHANISCHES KRACK- UND HYDRIERVERFAHREN
CRAQUAGE ET HYDROGENATION THERMOMECANIQUES

(30) Priority: 12.09.1994 NO 943367
(43) Date of publication of application: 02.07.1997
(73) Proprietor: THERMTECH A/S, 6900 Floro (NO)
(72) Inventor: ELLINGSEN, Olav, - (NO)
(74) Representative: Karlsson, Leif Karl Gunnar
(86) International application number: NO9500157
(87) International publication number: WO96008544

(56) References cited:
- WO-A-91/04810
- WO-A-94/08680
- US-A- 3 282 826
- US-A- 4 250 015
- US-A- 4 344 836

## Description

The balancing of product yield and marked demand of gasoline supplies, without the manufacture of large quantities of fractions having low commercial value, has for a long time required processes for the conversion of hydrocarbons of high molecular weight range and/or structure into smaller molecular weight range and/or structure. Basic processes for this are still the socalled cracking processes in which heavy hydrocarbons and residues are broken down "cracked" into smaller, lower boiling molecules in the presence of high temperatures (380-540 C), high pressures (100>1000 psi) and often in the presence of added catalyst.

The energy to break the molecular bonds in refinery cracking processes is supplied by thermal motion of the molecules subjected to heating and excess pressure in addition to the effects of added catalyst(s).

Thus WO-A-9408680 discloses an apparatus adapted to the thermo-mechanical decomposition and the hydrogenation of hydrocarbons in liquid form. The energy necessary to the thermal decomposition is provided by the friction of the liquid hydrocarbons on the surface of the rods which are immerged into the liquid hydrocarbons. The technique according to this document also includes the use of an artificial gravitational field for decomposition of hydrocarbon compounds.

The present invention describes a method of achieving high efficiency cracking of carbonaceous material at low temperatures and pressure and with use of less energy than any known methods. The carbonaceous material consists of high molecular weight hydrocarbons, petroleum residues, plastic. rubber in either liquid or solid state. The method is defined in the appended claims.

The principle of the process is to treat the carbonaceous material in a mechanical established hot fluldized bed containing water and solids to achieve cracking in order to recover valuable oil products from:
1. Oil contaminated solids and sludge.
2. Tar sands.
3. Refinery feedstocks.
4. Plastics, rubbers and other carbonaceous material.

The mechanically fluidized bed generated in a process chamber can be established by different means. One practical means is to apply a hammer-mill construction. A second way is to use a ball-mill construction. It is also possible to establish a fluidized bed by using magnetic metal as bed material put into rapid motion by magnetic forces induced by an electical coil surrounding the process chamber vessel.

The hydrodynamic behaviour in the new process is a complex subject. It takes into consideration bed behaviour, the mechanics of bubbles and flow models. The description of bed behaviour includes observations about pressure fluctuations, flow regimes, incipient fluidization, phase holdups and solids entrainment, solids wettability and surface tension effects and overall bed rheology. The hydrodynamics, chemical reactor kinetics and final product composition, heat and mass transfer are strongly influenced by external means such as mechanical agitation which again are closely linked to operational aspects and mechanical motion of the bed.

Being a thermo-mechanical process, it is unique to other thermodynamic processes in several respects:
1. The fluidized bed condition of the mass in the reactor acts as a very efficient heat transfer fluid. The energy requirement of the process us very favorable compared to other processes as no external heating is required. The heat is applied in-situ by abrasion and agitation of the treated material.
2. Under steady-state reactor conditions and in the presence of water and solids a major advantage of the new technology is the reduction of high-boiling oil feedstock materials to make products in the middle distillate range, diesel oil or light gas oil of high economic value.
3. All high molecular weight material including asphaltenes and resins are subject to cracking to lower molecular weight compounds. Only trace amounts of residue or coke is being formed in the process under steady-state conditions. The fluidized bed condition of the mass in the reactor under steady state conditions acts as a diluent to inhibit bimolecular addition for condensation reactions relative to uni-molecular cracking reactions.

General observations of the chemical product composition of the final products:
1. Dependent on the chemical composition of the feedstock to the reactor.
2. A marked reduction in density/API gravity of product compared with the original feedstock if the latter is of high molecular weight.
3. One rather striking feature of the product composition is the fact that terminal olefins are virtually absent.
4. A marked reduction in the content of total aromatic hydrocarbons with a distribution shift from polycondensed aromatics (PAH) towards monoaromatics and diaromatics (napthenoaromatis) in the "refined" product composition. This strongly suggests that polycondensed aromatics (PAH) are being hydrogenated.
5. The aliphatic fraction of the products is characterized by a marked increase of cyclic alkanes compared with the corresponding feedstock. This may in part be due to hydrogenation of aromatics in the original feedstock as mentioned above.
6. The content of polar components in the products are considerably lower than the original material. Sulphur is being reduced by approx. 15% of feedstocks with rather limited content of metals like V and Ni as in residues from several North Sea crude oils. In residues of crude oils from the Middle East (Kuwait) that contain appreciable large amounts of metals sulphur content has been reduced by close to 60%.
   Initially sulphur is being removed from thiophene type structures (abundant in Middle East crude oil) and less abundant in crude oils from the North Sea as H₂S which is partly reacted with nickel and vanadium oxides from Porphyrinic compounds to the corresponding sulphides and partly transformed to elemental sulphur which again react with the naphthenoaromatic compounds under the experimental reactor conditions. Higher concentrations of metals nickel and vanadium leaves less H₂S to be transferred to elemental sulphur and which can enter into "new" reactions with naphthenoaromatics.
7. The nitrogen removal is estimated to approx. 85%.
8. Oxygen removal is estimated to close to 90%. Most of the functional groups in this category contains substituents of -OH and -COOH type that will not survive the reactor conditions in the process.
9. The thermic cracking leads to en efficient removal of metals from the original feedstock with a decline in Ni of 88% and V of >95%.
10.Non-condensable gases amounting to <5% of the total mass of the original feedstock for many types of feedstocks (exceptions are coke and oil-shale) under steady state conditions consist mainly of CO₂, CO, N₂, CH₄, H₂, O₂ and low concentrations of ethane and propane. Only trace amounts of H₂S, SO₂, RSR, RSSR, NH₃ and NOₓ have been observed. Minute amount of organic sulphides (RSR) and organic disulphides (RSSR) have observed.

The creation of transient cavitation bubbles of high pressure (>300 bars) and temperature (>5000°) is due to the hydrodynamic conditions in the reaction chamber. Hydrodynamic cavitation can affect a liquid through two possible avenues. The first is that the liquid is disrupted by inhomogeneous presence of the bubbles. The second avenue through which cavitation affects a fluid is bubble dynamics. The main interest in cavitation bubble dynamics arises from the destructive action due to the collapse of bubbles in liquids near solid boundaries.

Extremely high temperatures and pressures are being produced in the final phase of implosion. The vibrations of bubbles are so fast that little heat exchange occurs with the liquid environment. The vapor therefore is strongly heated in the compression phase. Chemical reactions may take place in the hot gas bubbles, and these reactions may be understood in terms of what is known from combustion chemistry. Other reactions occur in the cooler interfacial region between the gas bubble and the liquid and may be understood in light of radiation chemistry of solutions. High molecular weight components may be decomposed by free radical attack and by direct thermal action. This phase is characterized by strong temperature and pressure gradients. An important feature of the kinetics of these reactions in the accumulation of non volatile hydrophobc components at this interface. This fact combined with temperatures of many hundred degrees or even more than thousand degrees K, high pressures and short reaction times (<100 nsec) decide the final product composition.

Quenching of the released heat from the micro-bubbles prevents the formation of the cracking elements into longchained compounds and coke. The vibrations of bubbles are so fast that little heat exchange occurs with the liquid environment.

Thermal dissolution of water in the compression phase (following the expansion phase) of the oscillating gas bubble form hydrogen atoms- and hydroxy-radicals. Reactions of the radicals have to be discussed in terms of what is known from combustion chemistry whereas diffusion of the radicals to the cooler interfacial area undergo reaction known from radiation chemistry. The radicals which reach the interfacial region are present in very high concentrations.

This is also a very important factor in explaining the chemical composition of the final reaction products.

Technology based on the invention is environmental friendly as emission to air and discharge to water is kept at a minimum.

As previously mentioned hydrodynamics, chemical reactor kinetics, heat and mass transfer are closely linked to operational aspects and mechanical motion of the bed in process. The latter is established in such a manner that the energy to establish the bed also delivers enough energy to heat it to the desired process temperature and to maintain the temperature during the process. This is achieved by whipping and crushing the oil-water-soild mixture with mechanical means generating the bed.

A substantial higher pressure (a pressure front) is generated in the front of the mechanical means against the fluidized solids. The crushing of the particles that takes place in the front and at the sides of the mechanical means, gives rise to local overheating of the material. The direct effect of this is that the gas/liquid already present in cracks and crevices of solid particles will be compressed and obtain a higher temperatures than the bulk fluidized bed temperature. As this "overheated" gas/liquid in the next moment ends up on the "back-side" of the mechanical means and are subjected to an extremely rapid pressure drop, the gas will expand rapidly together with intensive boiling and an explosive evaporation of liquid components creating a tremendous turbulence. Mechanical agitation results in 'the establishment of a "moving" pressure/temperature condition on all praticles in the vicinity of the mechanical means this is different from the general conditions in the process chamber. This leads to an instantaneous evaporation of water and the hydrocarbon fractions that have a boiling point below the temperature corresponding to the partial pressure under the given process conditions. The evaporation proceeds so quickly that it can crush a larger portion of the heavier hydrocarbons into mist which when depending upon the partial pressure can migrate into the transitating cavitating bubbles described below.

Cracks and crevices in the solids are also acting as nucleation sites of cavitating bubbles which refers to the growth of preexisting gas pockets or microbubble into a macroscopically observable bubble. Apparently the cracks and crevices are imperfectly wetted by the liquid and so contain gas pockets that acts as sites of bubble growth. These bubbles can expand to many times their original size. Containing mostly vapour from the liquid these transient cavities collapse violently as there is little residual permanent gas to cushion the implosion. The chemical reaction kinetics of the involatile components described earlier have their origin in these collapsing bubbles generated by the shock vaves induced by colliding particles (solids) from the fluidized bed. The frequency of the violently pulsating shock vaves can be expressed as a relation between the speed of the moving object and the relative speed and directions of the particles and the size of the solid particles in the fluidized bed. The intensity of these effects increases by v³ where v is the peripheral speed of the moving mechanical means and thus even small adjustments of the speed will have a major impact of the chemical reaction kinetics in the reactor. Collapsing transient cavities are believed to occur mainly in liquids exposed to higher intensities. For a liquid stimulated by sonic energy this value has been found to be greater than 10W/cm². A typical frequency of the oscillating shock vaves in a process according to the invention has been calculated to be in the area of 1600 kHz.

By the reference to the following drawings, some potential lay-out of the process is now described.
- Figure 1: shows a reactor system according to the invention,
- figure 2: shows a longitudinal cross section of the reactor in figure 1,
- figure 3: shows a rotor used in the reactor in figure 1 and 2,
- figure 4: shows possible embodiments of friction elements,
- figure 5: shows an alternative reactor system according to the invention,
- figure 6: shows a longitudinal cross section of the reactor in figure 5,
- figure 7: shows a further alternative reactor system according to the invention,
- figure 8: shows a longitudinal cross section of the reactor in figure 7,
- figure 9: shows a third alternative reactor system according to the invention, and
- figure 10: shows the reactor in figure 9 in greater scale.

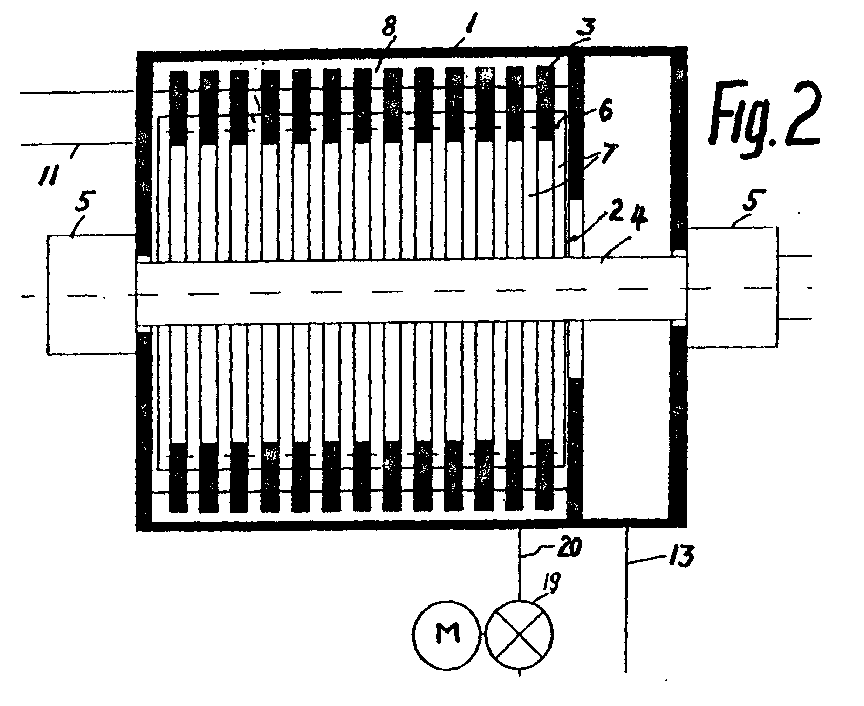

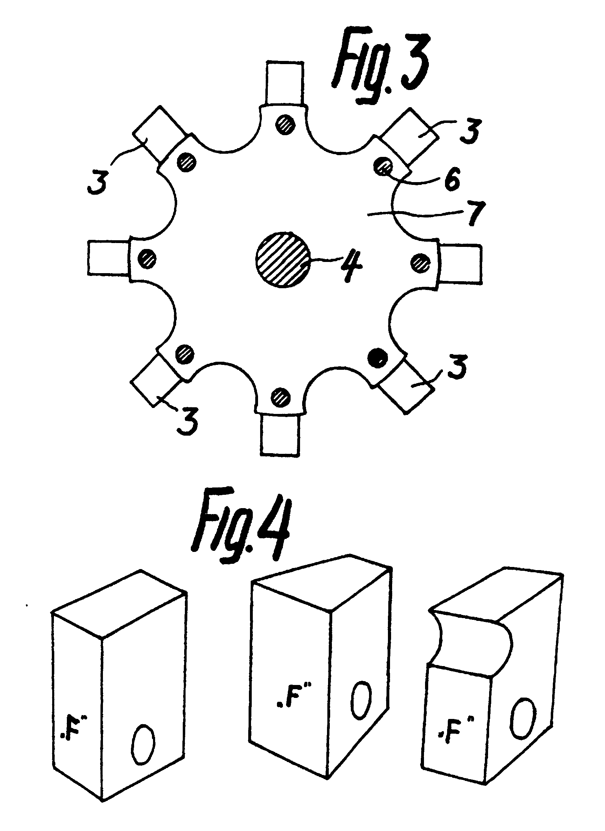

Figure 2 shows a reactor chamber or vessel 1 with a rotor 2 including friction elements 3. The rotor 2 further includes a shaft 4 sealed in the reactor with mechanical seals 5. The friction elements 3 are pivotably mounted at 6 (see also figure 3) in the rotor plates 7. In the embodiment shown each pair of adjacent rotor plates 7 carries a number of friction elements 3 (the remaining elements in figure 3 belong to the next rotor plate pair). Thus the friction elements 3 are staggered relative the next set of friction elements. In the shown lay-out there may of course be a total of eight friction elements in each set. The staggered arrangement is however believed to achieve a better turbulent action in the bed 8 (figure 2) of grained solids.

By larger process chambers, the number of friction elements will increase accordingly and in relation of the amount of power delivered to the rotor 4.

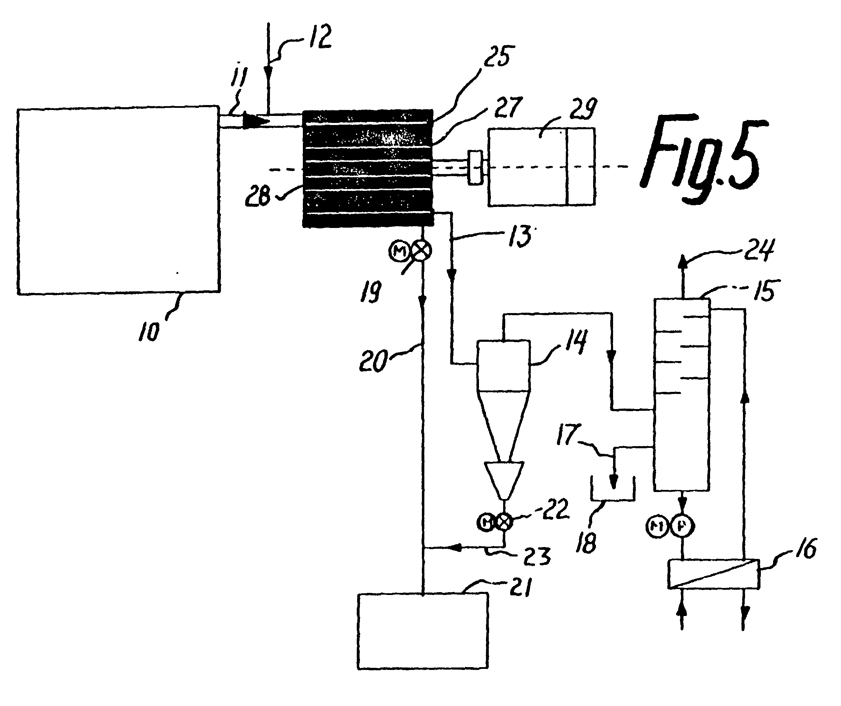

The friction elements may have a number of forms, three of which being disclosed in figure 4a, b, and c. The forward or impact faces of the friction elements in figure 4 are depicted with the letter "F".

The friction elements 3 are pivotable mounted in between adjacent rotor plates 7 by means of rods 6 extending over the length of the rotor 2.

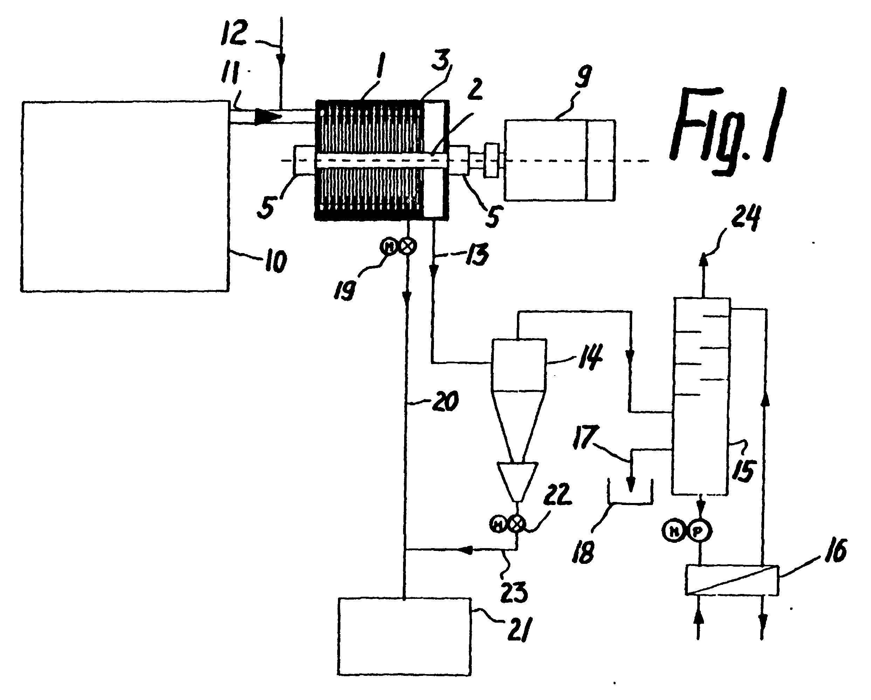

Referring now to figure 1 one can observe that the rotor 2 is driven by a rotating source 9 which can be an electrical motor, a diesel engine, a gas or steam turbine or the like. The material is brought to the reactor from a hopper 10 by a feeding device 11 which may be a screw-conveyor, mono-pump or a similar transport device. If the material does not contain water, water can be added to the flow from the pipe 12.

The cracked hydrocarbon gases and over-saturated steam is leaving the reactor via the pipe 13 and a cyclone 14 and proceed to a condenser unit 15 which can be a baffle tray condenser, a tubular condenser or a distillation tower. The different fractions of the oil can be separated directly from the recovered hydrocarbon gases. The heat from condensation is removed by an oil cooler 16 cooled either by water or air. The recovered oil is discharged from the condenser by a pipe 17 to a tank 18.

The solids is leaving the reactor via a rotating valve 19 and a tansport device 20 which can be a screw or belt conveyor or an air transportation pipe system to a container 21. The solids separated from the cyclone 14 is transported via a rotating valve 22 to the container 21 either by being connected to the transport device 20 or directly to the container 21 by a cyclone transport device 23.

Outlet for non-condensable gases is from the pipe 24 to a filter unit or to a flare tower or being accumulated in a pressure tank - not shown.

Figure 5 shows another lay-out of the reaction chamber 25 consisting of two concentric pipes of non-magnetic material with closed ends. The annulas 26 is filled with small steel balls which are brought into rotation by the rotor 27 having permanent or electrical charged magnets 28. When the rotor rotates by means of the motor 29 the magnetic field will rotate the steel balls thus whipping the material fed into the reactor from the hopper 10. The outlet for the hydrocarbon gases, over-saturated steam and solid is as illustrated in the schematics of figure 1.

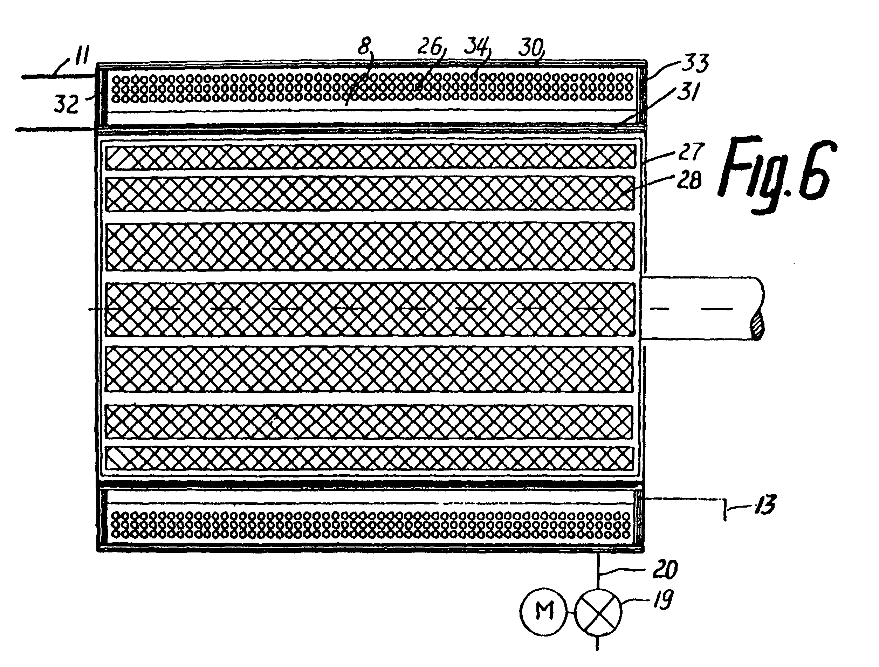

Figure 6 shows details of the reactor 25. The reactor 25 comprises two concentric tubular bodies 30 and 31 with annular plates 32 and 33 thus forming the annulus 26. The annulus 26 contains steel balls 34 which are brought to move by the rotor 27 having permanent or electrical charged magnets 28.

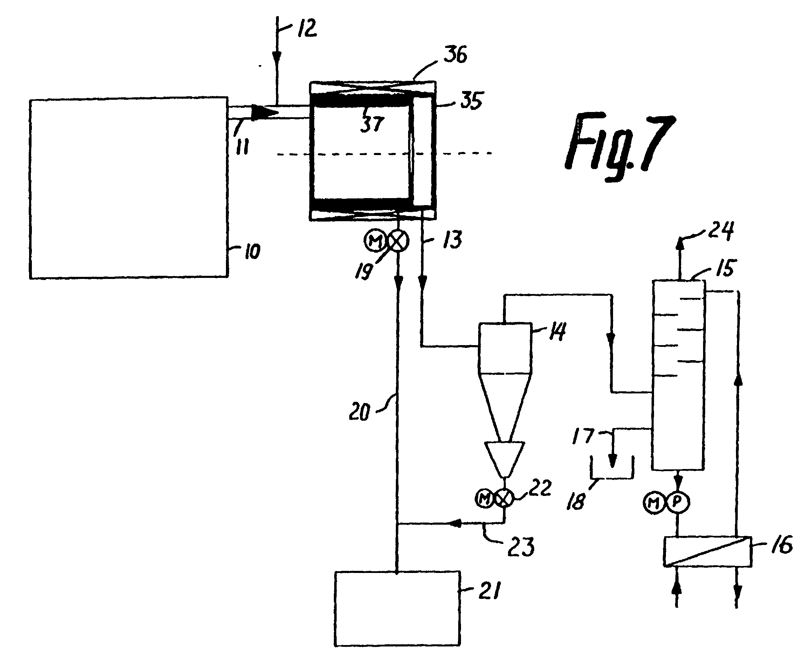

Figure 7 shows another lay-out of a reactor 35 made of non-magnetic material having an electrical coil 36 as in a synchronous motor surrounding the reactor. The reaction chamber contains steel balls 37 which is put into rotation when activating the coil 36 by alternating current similar to a synchronous electrical motor thus whipping the material fed into the reactor from the hopper 10. The outlet of the hydrocarbon gases, over-saturated steam and solids is as illustrated in the schematics of figure 1.

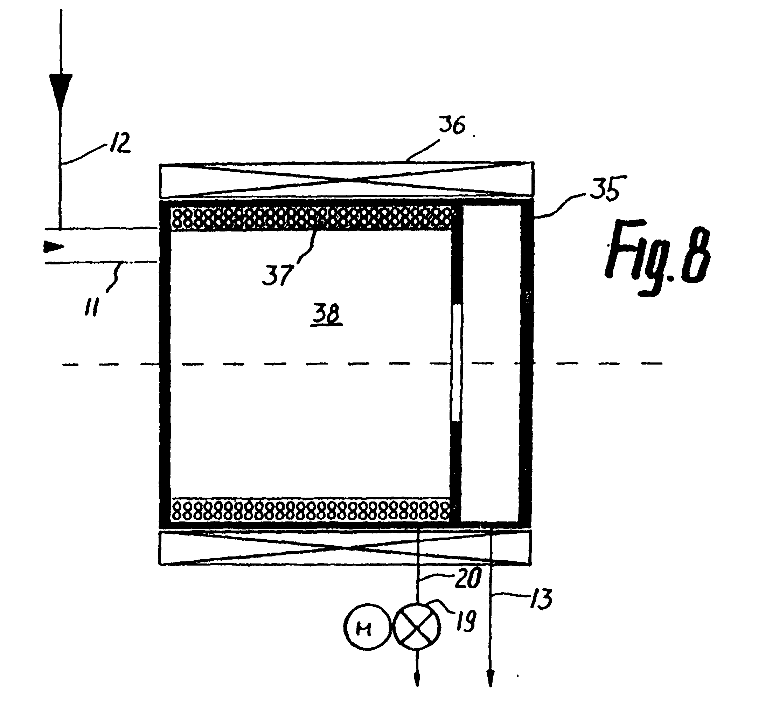

Figure 8 visualises details of the reactor 35. The reactor 35 comprises a vessel made of non-magnetic material having an electrical coil 36 surrounding the vessel. The vessel includes a reaction chamber 38 which contains steel balls 37. These steel balls are activated to move adjacent the chamber wall when the coil 36 is activated by alternating current.

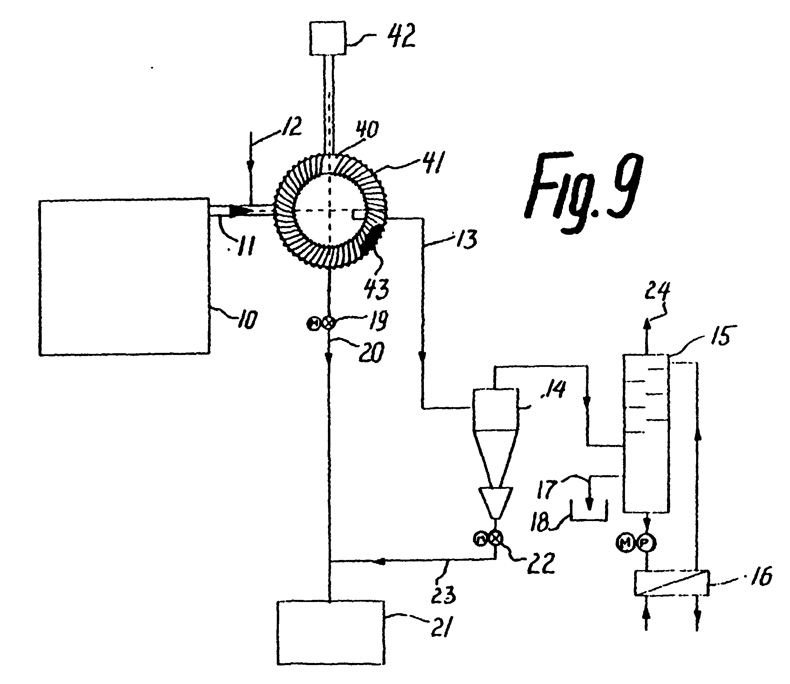

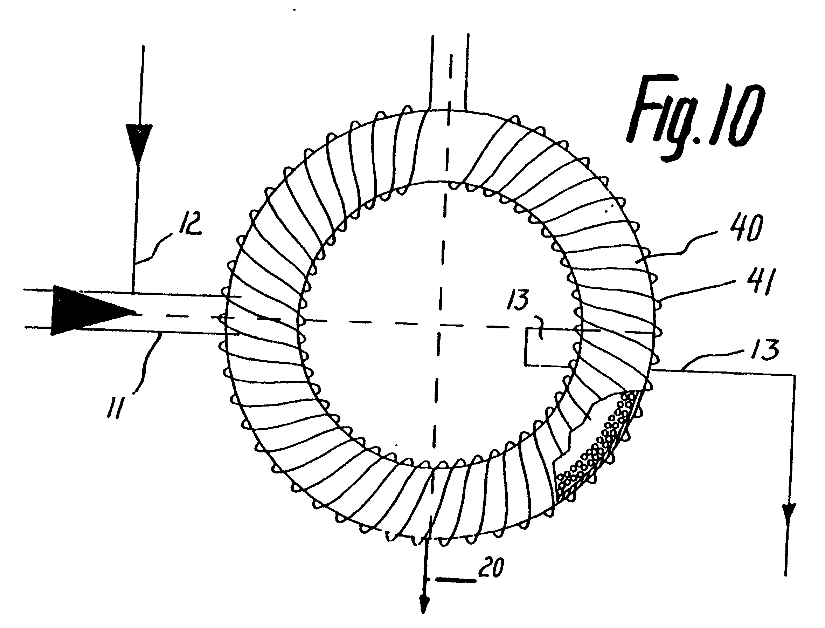

Figure 9 and 10 show another lay-out of a reactor 40 made of a non-magnetic material surrounded with magnetic coils 41 as in a torrid magnet. The coils are activated with alternating current from a source 42. The hollow reactor is partly filled with either steel balls 43 or balls of magneto-strictive material that will oscillate when subject to an alternating magnetic field, thus applying mechanical forces to the material fed into the reactor from the hopper 10. When using steel balls only, the balls will rotate in the torrid reactor, thus whipping the material and creating mechanical generated heat in it. The outlet for the hydrocaebon gases, over-saturated steam and solids is as illustrated in the schematics of figure 1.

## Claims

1. A method for thermodynamic cracking and hydrogenation of carbonaceous materials consisting of high molecular weight hydrocarbons, petroleum residues, tar sand, oil-shale, plastic, rubber in liquid or solid state, where a mechanically fluidised bed is established comprising the carbonaceous materials, solids and water by bringing movable mechanical elements in direct contact with the carbonaceous materials, solids and water so that the carbonaceous material, water and solids are mechanically heated by the action of the elements and that the carbonaceous material is cracked and hydrogenated in the presence of hydrogen radicals released from water.

2. A method according to claim 1, **characterized in that** the movable friction elements are mounted on a rotor and that the method further includes rotating the rotor so that the friction elements contact the carbonaceous material.

3. A method according to claim 1, **characterized in that** the method also comprises the use of steel balls as friction elements and that the method includes applying magnetic force to the steel balls in such way that the steel balls contact the carbonaceous material.

## Patentansprüche

1. Verfahren zum thermodynamischen Cracken und Hydrieren von kohlenstoffhaltigen Materialien, bestehend aus Kohlenwasserstoffen mit hohem Molekulargewicht, Erdölrückständen, Teersand, Ölschiefer, Kunststoff, Kautschuk in flüssigem oder festem Zustand, wobei ein mechanisches Fließbett eingerichtet wird, das die kohlenstoffhaltigen Materialien, Feststoffe und Wasser umfasst, indem man bewegliche mechanische Elemente in direkten Kontakt mit den kohlenstoffhaltigen Materialien, Feststoffen und Wasser bringt, so dass das kohlenstoffhaltige Material, Wasser und Feststoffe durch die Wirkung der Elemente mechanisch erwärmt werden und das kohlenstoffhaltige Material in Gegenwart von Wasserstoffradikalen, die von Wasser freigesetzt werden, gecrackt und hydriert wird.

2. Verfahren nach Anspruch 1, **dadurch gekennzeichnet, dass** die beweglichen Reibungselemente an einem Rotor angebracht sind und dass das Verfahren außerdem das Drehen des Rotors umfasst, so dass die Reibungselemente mit dem kohlenstoffhaltigen Material in Kontakt kommen.

3. Verfahren nach Anspruch 1, **dadurch gekennzeichnet, dass** das Verfahren auch die Verwendung von Stahlkugeln als Reibungselemente umfasst und dass das Verfahren das Ausüben einer Magnetkraft auf die Stahlkugeln auf eine solche Weise einschließt, dass die Stahlkugeln mit dem kohlenstoffhaltigen Material in Kontakt kommen.

## Revendications

1. Procédé de craquage et d'hydrogénation thermodynamique de matériaux carbonés consistant en des hydrocarbures de poids moléculaire élevé, des résidus pétroliers, du sable bitumineux, du schiste bitumineux, du plastique, du caoutchouc à l'état liquide ou solide, où un lit fluidisé mécaniquement est réalisé comprenant les matériaux carbonés, des solides et de l'eau en amenant des éléments mécaniques mobiles en contact direct avec les matériaux carbonés, les solides et l'eau, de manière que le matériau carboné, l'eau et les solides soient chauffés mécaniquement par l'action des éléments et que le matériau carboné soit craqué et hydrogéné en présence de radicaux hydrogène libérés par l'eau.

2. Procédé selon la revendication 1, **caractérisé en ce que** les éléments de friction mobiles sont montés sur un rotor et **en ce que** le procédé comprend, en outre, la mise en rotation du rotor de manière que les éléments de friction soient en contact avec le matériau carboné.

3. Procédé selon la revendication 1, **caractérisé en ce que** le procédé comprend également l'utilisation de billes d'acier comme éléments de friction et **en ce que** le procédé comprend l'application d'une force magnétique aux billes d'acier de façon telle que les billes d'acier soient en contact avec le matériau carboné.
